# EUROPEAN PATENT APPLICATION

(11) **EP 3 287 049 A1**
(43) Date of publication of application: **28.02.2018**
(21) Application number: 17187705.3
(22) Date of filing: 24.08.2017
(51) Int. Cl.: A47J 31/057, A47J 31/12

(54) **APPARATUS WITH INSULATING PROPERTIES FOR BREWING HOT BEVERAGES**

(30) Priority: 24.08.2016 DK 201670639
(71) Applicant: Christiansen, Súni, 188 Hoyvik (FO)
(72) Inventor: Christiansen, Súni, 188 Hoyvik (FO)
(74) Representative: Tellefsen, Jens J.

(57) **Abstract**

Apparatus for brewing hot infusion beverages (1), where said apparatus comprises an outer container (10) having a side wall (11) and a bottom (12) and an inner container (20) having a sidewall (21) and a bottom (24), said inner container (20) arranged concentrically inside said outer container (10), and a lid (30) comprising a brewing chamber (31) in fluid communication with the inner container (20) and wherein a filter element (34) is provided, and a conduit (50), and a heating element (62) in thermal contact with said conduit (50), and a source of energy characterized in that said conduit (50) is concentrically arranged inside the inner container (20), and said heating element (62) is concentrically arranged around said conduit (50), where said conduit (50) is in fluid communication with the outer container (10) adjacent the bottom (12) of said outer container (10) and said brewing chamber (31).

## Description

### Field of the Invention

The present invention relates to an apparatus for brewing hot infusion beverages as well as a method of using such an apparatus.

### Background of the Invention

Hot infusion beverages include coffee, tea, hot chocolate, soup, bouillon and other desired beverages which are made available in a dry, powder or granulate form such that by adding water a finished, ready-to-drink beverage is available.

Although a large variety of drinks may be finished according to the invention the invention will now be described with reference to brewing coffee, but it shall be understood that the apparatus is suitable for brewing any type of infusion beverage and in particular hot infusion beverages.

Electrically powered devices for brewing coffee are available in a number of types and constructions. Typically they are operating on the outlet current in that particular country, i.e. for example 110 volts or 230 volts. Additionally, devices have been designed for brewing beverages, e.g. in boats, cars, campers and the like, using typically 12 V or 24 V.

One such example is disclosed in US2007/0221067 where a relatively compact brewing apparatus is disclosed. The brewing apparatus has an inner and outer container arranged concentrically and furthermore has a conduit suitable to allow flow of liquid from the outer container through a brewing chamber where the extract from which the drink is to be extracted is placed. The brewing chamber is in fluid communication with the inner container such that the heating of the liquid in the outer container and subsequent evacuation of the outer container aims at preserving the heat supplied to the system by a heating element which is used to heat the liquid in the outer container.

The heating element is typically arranged in the bottom of the device and connected to an electrical outlet with a suitable cord. In addition to the conduit pipe a number of valves and activating mechanisms are installed such that the water pressure is controlled in a manner whereby it is ensured that the heating element heats the water sufficiently, i.e. to the desired temperature before a valve allows the liquid to move into the conduit connected to the brewing chamber. In addition to the pressure valves the device comprises outlets, mechanical activation means and a host of other features which make the device relatively complicated, difficult to clean and take up unnecessary space when thinking of the main task of the device, i.e. to brew a hot infusion beverage.

### Object of the Invention

On this background it is the object of the present invention to provide an apparatus for brewing hot infusion beverages which addresses the disadvantages of the prior art device and at the same time provides numerous additional advantageous features.

### Description of the Invention

The invention addresses this by providing an apparatus for brewing hot infusion beverages, where said apparatus comprises an outer container having a side wall and a bottom and an inner container having a sidewall and a bottom, said inner container arranged concentrically inside said outer container, and a lid comprising a brewing chamber in fluid communication with the inner container and wherein a filter element is provided, and a conduit, and a heating element in thermal contact with said conduit, (and thereby the bottom of the inner container), and a source of energy characterized in that said conduit is concentrically arranged inside the inner container, and said heating element is concentrically arranged around said conduit, where said conduit is in fluid communication with the outer container adjacent the bottom of said outer container and said brewing chamber.

By arranging the heating element concentrically around the conduit and arranging the conduit concentrically inside the inner container and in communication with the bottom of the outer container a number of advantages are achieved.

As the liquid, typically water, in the outer container is heated by the heating element, it will eventually be so warm that the water will expand and at a certain temperature water will transfer from the liquid state to the gaseous state as steam. During this process water/steam will be forced upwards through the conduit and into the brewing chamber. In the brewing chamber water will percolate through the extract from the drink which is desired and drip into the inner container. Due to the fact that the conduit is arranged inside the inner container there will be a heat exchange between the hot liquid in the conduit being heated by the heating element at the bottom of the apparatus and the contents of the inner container.

In the beginning the contents of the inner container will mainly be air, and as the air heats up and as water from the brewing chamber enters the container, the air will expand and be forced out through the expansion valve. As more and more liquid is percolated through the extract in the brewing chamber and dripping into the inner chamber, liquid will assemble in the inner container. Due to the heat exchange with the conduit the liquid in the inner container will constantly be heated such that the energy lost through condensation in the brewing chamber and its percolation through the extract and dripping down into the inner chamber is compensated whereby a hot drink is brewed and maintained (at a desired temperature) inside the inner chamber.

At the same time, as the outer chamber is being evacuated due to the constant heating from the heating element, the liquid is replaced by air or steam which will also heat exchange with the inner container thereby also contributing to the maintenance of a hot drink inside the inner container.

Furthermore, by arranging the conduit at the bottom of the outer container it is ensured that as the heating continues and the liquid in the outer container is turned to steam or hot water thereby rising through the conduit, the outer chamber will eventually be completely filled with steam without any liquid rest such that the outer chamber will gain insulating properties.

In this context, due to the small dimensions of the overall construction, a plurality of heating elements (induction coils) may be used - arranged such that they all contribute to the heating of the fluid, and/or in maintaining the temperature of the fluid.

In a still further advantageous embodiment of the invention the top ring comprises a first air outlet valve allowing air in the inner container to communicate with the ambient surroundings, and optionally a second outlet valve allowing air to leave the outer container to the ambient surroundings, the second outlet valve's ability to let air escape the outer container is adjustable.

The valve serves to allow air trapped inside the inner container which expands as the hot liquid is introduced into the container to escape into the ambient surroundings.

By adjusting the second outlet valve properly it is possible to acquire a substantial overpressure before the valve opens, such that it is ensured that the water in the outer container is steam or very close to its steam phase, or at least has achieved a temperature such that the expansion of the water creates the overpressure thereby indicating that a desired brewing temperature has been reached.

In a further advantageous embodiment of the invention the heating element is an induction coil arranged surrounding the conduit. In this manner the apparatus is a single unit having all necessary features integrated in one form. Also the induction coil translates electrical energy into heat very quickly and efficiently. Therefore a very efficient and fast heating of the water is achieved. Due to the high efficiency of the induction coil technology, the size of the heating element may also be kept very small, without sacrificing efficiency and effect.

Further, a thermostat in contact with the inner container to measure the temperature of the fluid may be provided. The object of the thermostat is to
- avoid overheating while boiling the water getting it into the inner container
- maintain the sufficient temperature of the brewed beverage - as long as electrical energy is available

In an alternative embodiment the heating element is a separate part, where said heating element comprises a thermal heating surface, and where the bottom of the outer container is thermally conductive, and has a shape corresponding to the thermal heating surface of the heating element. The specific arrangement of the heating element, for example an induction coil, will be accommodated in the bottom part, and in thermal contact with the outer chamber, when attached to the outer chamber.

The interface between the heating element and the bottom of the outer container is designed such that good thermal contact is achieved thereby allowing the water to easily exchange energy with the bottom of the outer container and thereby transmit the heating with the liquid poured into the outer container.

At the same time the heating element and the bottom of the outer container may be fashioned or designed such that a certain click mechanism facilitates that the apparatus is stable when connected.

The heating element is connected and controlled by a temperature sensor and/or thermostat. This system works in two modes: a first mode where the heating element is controlled to assure that liquid is delivered in the brewing chamber at the correct temperature, for example for coffee the water temperature shall be 91-95 ° C, for other drinks the temperature may be different, and the thermostat may have adjustment means allowing for controlling the temperature settings. In a second mode, when the brewing process is complete, the thermostat will, as long as the brewing apparatus is connected to a power source maintain the brewed drink at a desirable drinking temperature, for example 65-75 ° C.

The temperature sensor/thermostat may be an infrared sensor measuring the temperature at the bottom of the outer container. In order to maintain the desired drinking temperature in the second mode the conduit (pipe) is used as heat conducting element, and may optionally be provided with additional heating means.

In a still further advantageous embodiment of the invention the outer container is made from an insulating material, or where the outer container has insulating properties obtained by a composite or multilayer container wall construction.

In this manner the apparatus provides a double layer of insulation when a beverage has been brewed in that the wall of the outer container is made from an insulating material and as such will have an insulating effect. Secondly, as the outer container is evacuated from liquid and replaced by air, this provides a further insulating layer. Stationary air has very good insulating properties (as compared to water) and as such the hot liquid in the inner container may be retained at a relatively high temperature for long periods of time.

In practice the wall of the outer container may be made from a double walled construction, for example from stainless steel or aluminum. Other composite materials such as fiber reinforced resins may also be used for the outer wall in which case a heat conductive element is cast in the composite construction in the zone where it is interfacing with the heating element in order to ensure that heat will be conducted from the heating element to the liquid inside the outer container.

In a still further advantageous embodiment a foam sleeve having insulating properties may be fitted outside the outer container, partly as an extra insulating layer but also as protection for the apparatus as such.

Another important feature of the invention is provided in a further advantageous embodiment where a tilt alarm is integrated in the apparatus, where said tilt alarm is activated when/if the apparatus is tilted/displaced a certain angle from a vertical upright position, in which position the conduit is substantially vertical, where the tilt alarm at least disengages the source of energy and optionally sounds an audible alarm and/or visible alarm.

This tilt alarm is particularly interesting in applications where the apparatus according to the invention is used in vehicles, boats and the like which are not completely stable such that tilt of the apparatus could cause injury or damage to the surroundings. The tilt alarm may be of any suitable type having a minimal size in order to be readily in-tegratable in the construction according to the present invention.

In order to better distribute water/steam which is transported through the conduit to the brewing chamber a water distribution member is arranged inside the brewing chamber such that the water leaving the conduit in the brewing chamber will be substantially evenly distributed across a surface inside the brewing chamber whereby the water will be distributed across the top surface of the extract of the desired drink, e.g. dry coffee powder such that substantially all coffee powder arranged in the brewing chamber will be wetted by the heated water. The water distributing member is preferably integrated in the wall of the lid. Alternatively the water distributing member may be integrated in a top part of the brewing chamber, or be suspended in the brewing chamber.

In an alternative embodiment the conduit may be provided with an adjustable valve, such that the valve only opens at a given preset pressure, corresponding to a certain minimum temperature of the water in the outer container. This in order to ensure that the water led to the brewing chamber has a desired minimum temperature, before the brewing process commences.

The apparatus may also be provided with a drinking or pouring spout. Preferably the spout is moveable between a closed position and an open position.

In the closed position the top of the spout is flush with the upper side of the brewing chamber, and a mechanism in the spout effectively closes of a fluid connection between the brewing chamber and an outlet provided in a top part of the spout.

In the open position the spout has partly "popped out" of the brewing chamber, exposing an opening in the fluid connection, thereby providing a channel between the inner chamber (containing the brewed (hot) liquid), and the ambient.

For hygienic reasons the mechanism urging the spout out of the closed position is biased by means of magnets integrated in the body of the brewing chamber and the spout. Springs would in this context constitute a potential source of contamination as they would be substantially hidden inside the construction and thereby very difficult to clean adequately.

The invention is also directed to a method of brewing a hot infusion beverage using an apparatus as described above.

### Description of the Drawing

The invention will now be described with reference to the accompanying drawing wherein
- Figure 1: illustrates a cross section through the apparatus
- Figure 2: illustrates a cross-section through part of the apparatus
- Figure 3: illustrates cup provided with a thread
- Figure 4: illustrate a cross-section through the brewing chamber
- Figure 5: illustrates a bottom view of the brewing chamber
- Figure 6: illustrates the top ring
- Figure 7: illustrates a cross section through a preferred embodiment of the apparatus.
- Figures 8-10: illustrates various details and mechanisms relating to activation of a drinking spout.
- Figure 11: illustrates a cross-section through one embodiment of the invention where many of the features discussed are integrated in one unit

### Detailed Description of the Invention

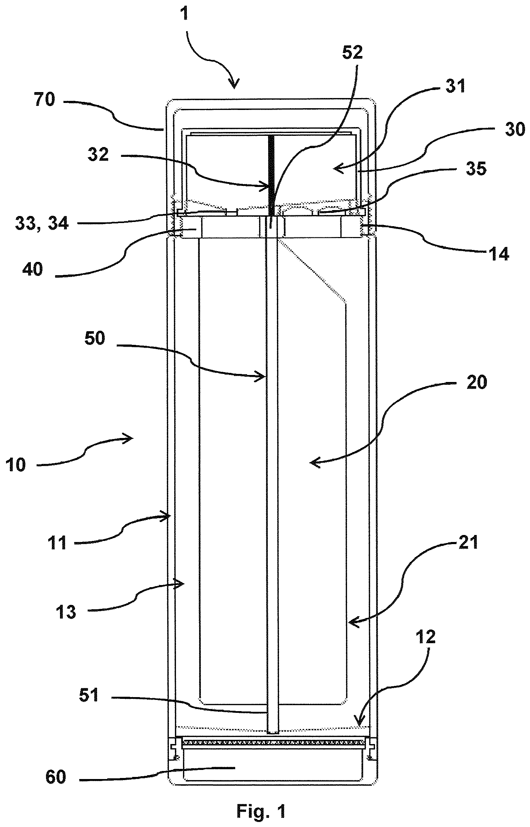

In figure 1 is illustrated a cross section through the apparatus for brewing hot infusion beverages according to the invention.

The apparatus 1 comprises an outer container 10 which has a side wall 11 and a bottom 12. Inside the outer container 10 is arranged an inner container 20. The inner container 20 is arranged substantially concentrically within the outer container 10 such that a space/volume 13 is present between the outer wall 21 of the inner container 20 and the wall 11 of the outer container 10.

The apparatus is furthermore provided with a lid 30 and in this particular embodiment the lid and the top of the inner and outer containers 10, 20 is enclosed by a removable cup 70.

The lid 30 encloses a brewing chamber 31 as well as a water distribution member 32. Furthermore, an opening 33 with a filter element 34 is provided such that the finished hot beverage can gain entry into the interior of the inner container 20. The lid 30 is furthermore provided with a removable lid 35. This removable lid 35 is provided in order to be able to fill and empty/clean extract from the brewing chamber. In this embodiment the brewing chamber is arranged on the top ring 40 which is also connected to both the outer container 10 and the inner container 20.

Centrally inside the apparatus is provided a conduit 50. In one end 51 the conduit has an open end at the very bottom of the outer container 12 such that it will be able to convey liquid from the bottom of the outer container 10 through the conduit and into the brewing chamber 31. Adjacent the brewing chamber 31 the conduit 50 has an open end 52 which in this embodiment is connected to the water distribution member 32 such that water conveyed in the conduit 50 will be transferred to the water distribution member 32 and from there drip down onto the extract of the beverage it is desirable to brew. In other embodiments the heated water may be introduced into the brewing chamber 31 without the use of a water distribution member.

In the lowermost end of the apparatus 1 is provided a heating element 60. The heating element in this embodiment is not specified in that any suitable heating element which is capable of fitting into the bottom of an apparatus 1 according to the present invention and at the same time provide sufficient energy in order to heat the water in the outer container 10 will be suitable to be used with the present invention. Non-limiting examples of suitable heating elements may be induction coils, resistive heating coils and the like.

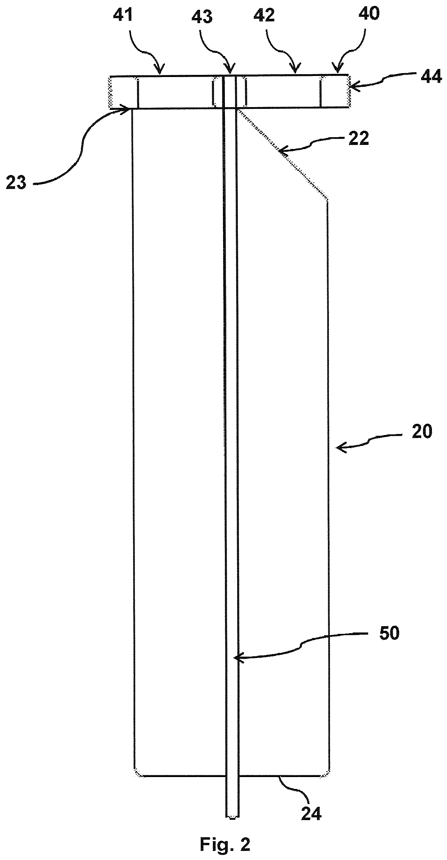

Turning to figure 2 a cross-section through part of the apparatus 1 is illustrated where the top ring 40, the inner container 20 as well as the conduit 50 is illustrated. As is clearly visible the upper part of the inner container 20 is provided with a taper 22 such that the inner container 20's upper periphery 23 fits to a first aperture 41 provided in the top ring 40. A second aperture 42 also provided in the top ring 40 foresees that liquid which is to be heated may be poured through the top ring 40 but not into the inner container 20 due to the taper 22. As for example water is poured through the aperture 42 it will not enter the inner container but be guided into the volume 13 between the outer container 10 and the inner container 20.

The first aperture 41 is, as is evident in figure 1, in use superposed the opening and filter element 33, 34 provided in the lid such that liquid having passed the extract placed in the brewing chamber 31 will be able to enter the inner container 20 by means of the first aperture 41. Furthermore, the conduit 50 passes through the bottom 24 of the inner container 20 and at the same time passes through the top part of the inner container 20 as well as through a central aperture 43 provided in the top ring 40. In this particular embodiment the top ring 40 along an outer periphery 44 is provided with a thread which thread fits into a corresponding thread 14 provided on the outer container 10. Consequently, by screwing the top ring 40 together with the inner container 20 and the conduit 50 into the thread 14 provided in the outer container 10 the apparatus is more or less assembled as illustrated in figure 1.

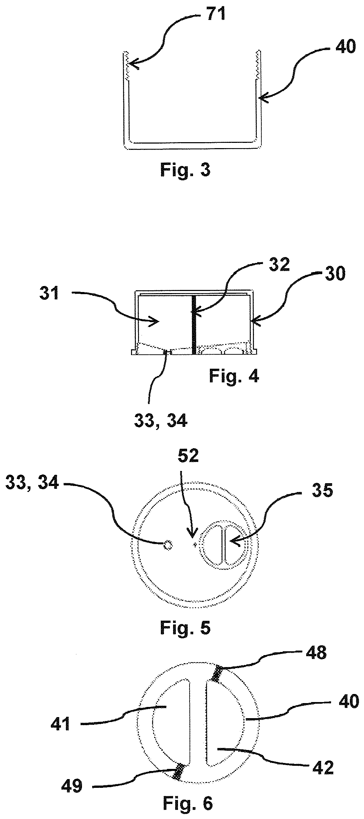

Turning to figure 3 the cup 70 is also seen as provided with a thread 71 such that the cup 70 may be fastened to the outside of the apparatus 1, when not in use. The cup 70 also provides added insulation, and as such helps to improve the performance of the apparatus.

In figure 4 and 5 are illustrated respectively a cross-section through the lid 30 as well as a bottom view of the lid. The removable lid 35 is provided with a closure member which may be unscrewed in order to gain access to the brewing chamber, for example in order to fill it or empty it from used extract or the like. The filter opening 33, 34 allows the hot water which has percolated through the extract to enter the inner container 20 and the central opening 52 allows the conduit to connect with the water distribution member 32 in order to create an even brewing process.

Turning to figure 6 the top ring 40 is illustrated having first and second apertures 41, 42 as already discussed above, where the aperture 41,42 allows access to the inner or outer container respectfully. Furthermore, pressure valves 48, 49 are provided in the top ring 40 such that any overpressure inside the respective containers 10, 20 may be alleviated (see also explanation above). Particularly the pressure valve 48 having access to the second aperture 42 and thereby to the volume 13 of the outer container may be pre-set such that a substantial pressure is desired before the valve opens. In this manner it is ensured that the water inside the volume 13 will be heated sufficiently in order to create a hot beverage having the desired brewing temperature.

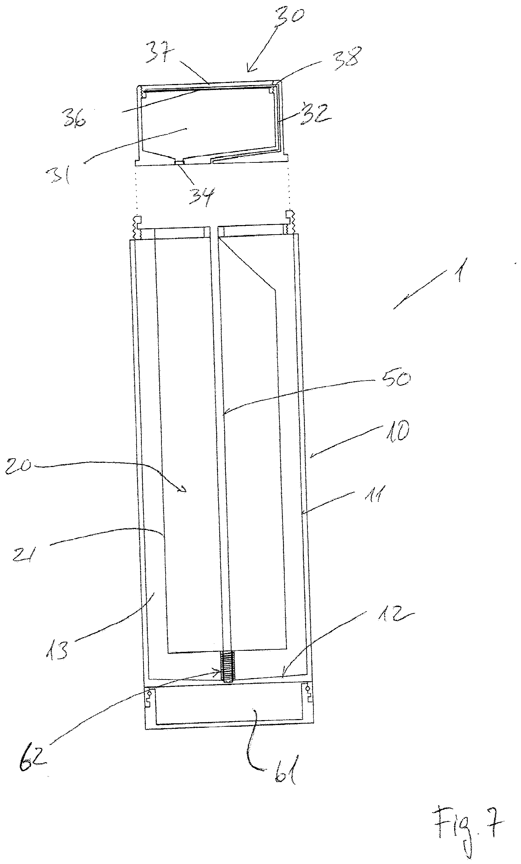

In figure 7 is illustrated a preferred embodiment of the invention. The features already mentioned above will be denoted with the same reference numbers in figure 7 as have already been introduced above.

In figure 7 the removable cup 70 is not illustrated and the lid 30 is separated from the inner and outer containers 10, 20.

The embodiment illustrated in figure 7 is particular and distinguished from the embodiments described above by two inventive features.

Furthermore, the lid 30 has been provided with a removable top lid part 37 which in the illustrated embodiment is fastened to the lid 30 by threads 38 at the perimeter of the removable part 37. By being able to remove part of the lid 37 access may be gained to the brewing chamber 31 for cleaning the brewing chamber or for replacing spent coffee extract by fresh coffee extract.

The other important feature in this embodiment is that the heating element 60 is in the shape of an induction coil. The induction coil 62 is arranged around the conduit 50 in the volume 13 between the inner and outer containers 10, 20. The induction coil's control circuits etc. are retained in the bottom chamber 61. In the bottom chamber may furthermore be provided a battery or transformer means such that the power supply to the induction coil may be connected directly or be supplied in the form of a rechargeable battery.

A sufficient powerful battery may be used as power supply for the water boiling process.

Naturally, the combination of a battery and a thermostat may provide the possibility of maintaining the desired temperature as long as there is any power in the battery.

The tilt alarm is not illustrated but will typically be installed in connection with the heating element 62 in that all electrical means in this manner is kept in the bottom section of the novel and inventive apparatus.

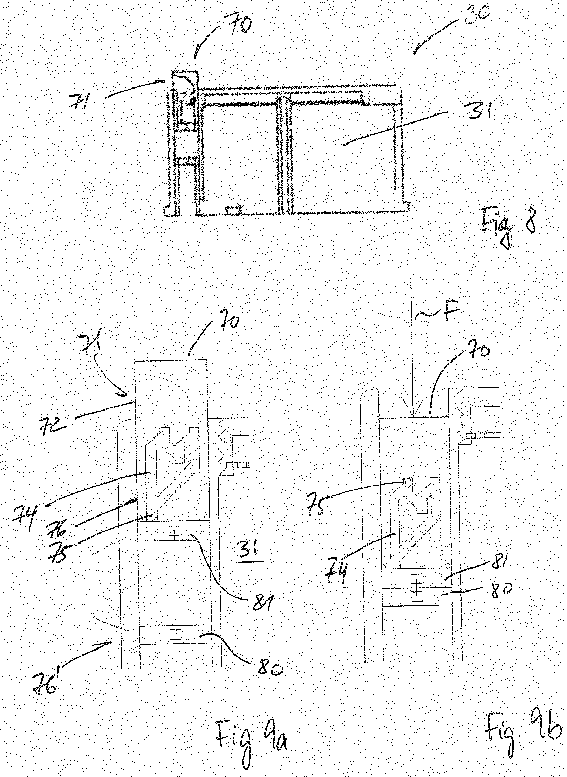

In figure 8 is illustrated a further version of the brewing chamber 30 where the brewing chamber is provided with a spout 70. The spout 70 is arranged such that it may be brought from a closed position where the fluid communication channel 71 is not in communication with the interior of the inner container (20, see fig 7) to a position where the fluid communication means and thereby also the opening in the spout 70 is accessible, for example as a drinking spout or pouring spout.

The spout's activation may be performed in a number of manners, but below particularly two different activating mechanisms will be described.

With reference to figures 9a-9e a first operating principle will be explained. The spout 70 is in figure 9a indicated as being in the open position such that there is fluid communication between the opening 72 and the inner container 20.

In the spout 70 is provided a guideway 74 in the shape of a groove. A tap 75 provided in the wall 76 of the cylindrical opening in the brewing chamber construction accommodating the spout 70 such that the tap 75 is inserted into the guideway 74 whereby when urging the spout 70 up or down the tap 75 will guide the spout's movement according to the shape of the groove 74.

In this context it should be noted that as this is a 2D illustration it should be taken into account that during the movement of the spout 70 which will be described, the spout will turn slightly about an axis in the longitudinal direction of the spout 70.

The opening 76 provided in the brewing chamber construction 30 is cylindrical and at a lower end of the opening 76' is provided a permanent magnet 80 in a ring-shape such that a central opening will allow liquid to pass through the magnet 80. A further magnet 81 is provided at a bottom end of the spout 70. The magnets are polarized such that they will push away from each other. Therefore, as the spout is moved downwards, the magnets 80, 81 will be biased against this movement.

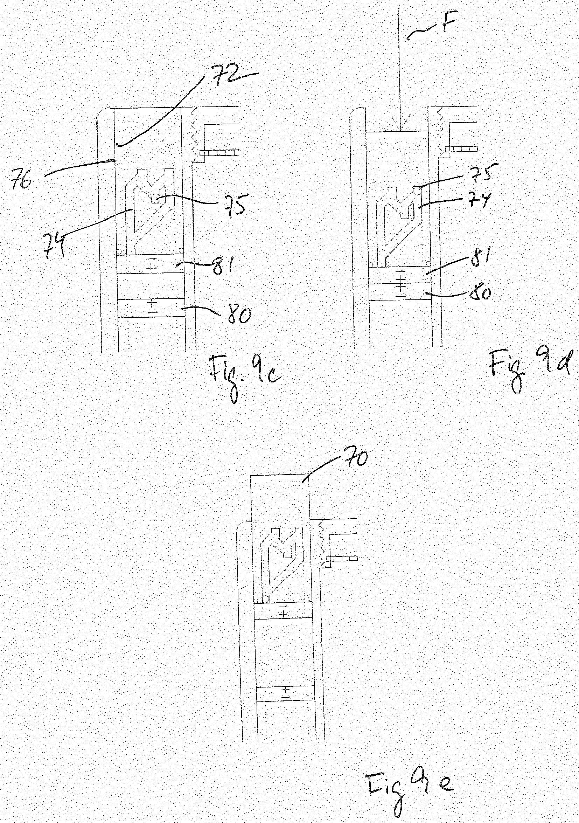

As illustrated in figure 9b a force F has pushed the spout downwards such that the two magnets 80, 81 are in close proximity. At the same time the tap 75 has moved to an upper position in the groove 74. Due to the shape of the groove 74, the tap 75 will, when the force F is removed, be urged upwards due to the action of the magnets 80, 81 whereby the tap 75 will end up in the situation as illustrated in figure 9c.

In this position depicted in figure 9c the spout 70 is locked, in that the magnets 80, 81 will urge the spout upwards, but this movement is hindered by the position of the tap 75 in the groove 74. At the same time the spout's opening 72 is closed by the wall 76 of the brewing chamber 30.

Further activation as indicated in figure 9d will move the tap 75 into the position indicated in figure 9d due to the guidance of the groove 74. In this position the magnets 80, 81 are again forced towards each other thereby creating a large magnetic force urging the magnet 81 away from the magnet 80.

Consequently, when the force F is removed, as indicated in figure 9e, the spout 70 will pop up again as indicated in figure 9a and the closing and opening cycle may be repeated again.

In a variation of this construction it should be mentioned that the magnets 80, 81 may be replaced by a spring, for example a helical spring, providing an opening in the central part of the spring such that liquid may pass through the spring member. It is, however, advantageous to use a magnet, particularly for cleaning reasons, in that the magnet may be relatively sealed in the construction of the brewing chamber and the spout or the like making it easier to clean whereas a spring due to the coils of the spring may provide a hygienic risk over time.

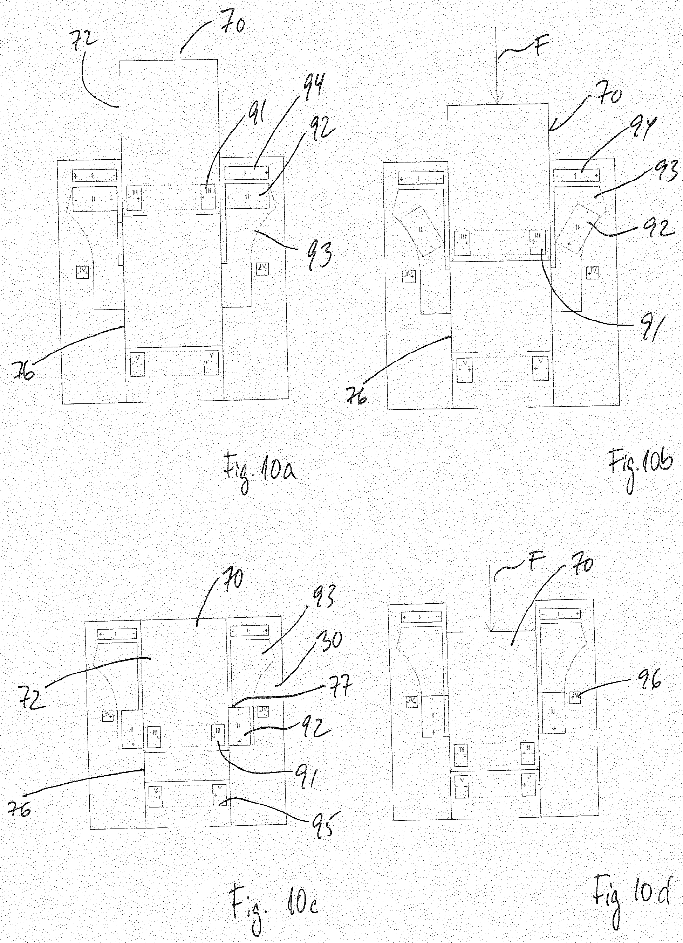

With reference to figures 10a-10f another opening and closing mechanism will be described which opening and closing mechanism is based on a number of distinct magnets cooperating in order to position the spout 70 in the desired position.

The reference numbers used for features above will be used with respect to the same (or similar features) in the explanation below.

In figure 10a is illustrated the spout 70 in an open position whereby the opening 72 is accessible.

Fluid communication with the inner container is established. In this position the spout is kept in position by a first magnet 91 being superposed a second magnet 92. These magnets 91, 92 are polarized such that they will attract each other whereby the spout 70 is maintained in the position indicated in figure 10a by the magnetic attraction between the magnets 91, 92.

The magnet 92 being arranged in a chamber 93 allows the magnet 92 to move as will be explained below.

In order to retain the magnet 92 in the position indicated in figure 10a a further magnet 94 is provided which magnet 94 has an attraction to the magnet 92. In this manner the magnet 92 will not move around in the chamber 93.

The attraction between the magnets 91 and 92 is stronger than the attraction between the magnets 92 and 94 such that as the spout 70 moves downwards urged by the force F as illustrated with reference to figure 10b, the magnet 92 will move together with the magnet 91 and the spout 70 and thereby come out of contact with the magnet 94.

As illustrated in figure 10b the magnet 92 will move downwards in the chamber 93 in a controlled manner.

In figure 10c is illustrated a position where the spout 70 has been urged downwards by the force F (see figure 10b) such that the top of the spout 70 is flush with the top of the brewing chamber 30.

In this position the opening 72 of the spout 70 is closed by the wall 76 of the brewing chamber construction. Due to the shape of the chamber 93 the magnet 92 will now have rotated approximately 90° into the position indicated in figure 10c.

In the wall 76 of the aperture receiving the spout 70 is provided a recess 77 such that the now rotated magnet 92 fits inside a recess. In order to move the magnet 92 into the recess the magnet 91 arranged at the bottom of the spout attracts the magnet 92 into engagement with the recess. In this position the magnet 91 has come into proximity with a further magnet 95 which is polarized such that it will be biased against the magnet 91. The closer the magnets 91, 95 come to each other, the stronger the force biasing them away from each other will be.

As the spout is forced further downwards by force F as indicated in figure 10d the biasing force between the magnets 91, 95 will be increased. At this point the pressure between the magnet 92 and the recess 97 has been lessened such that a small magnet 96 polarized opposite to the now upper end of the magnet 92 will urge the magnet 92 away from the recess 77 such that the spout 70 may again move upwards.

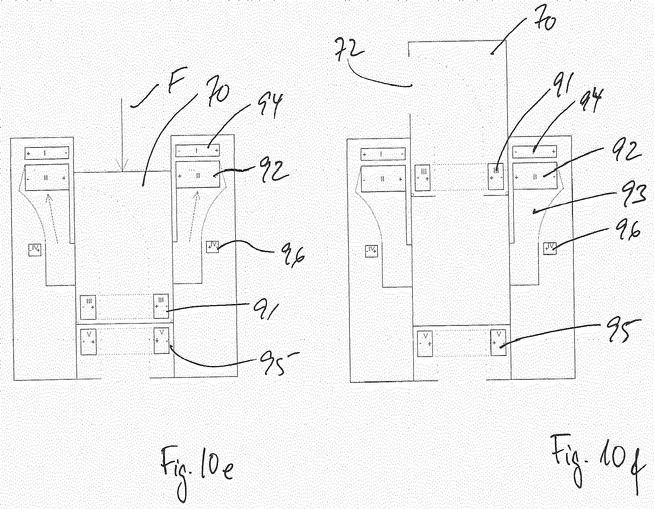

At the same time, as the magnet 92 has been released from its engagement with the recess 77, the magnet 92 due to the attraction of the magnet 94 will move upwards as indicated by the arrows in figure 10e. When the force F is removed, i.e. the spout 70 is not urged downwards as indicated in figure 10e, the spout will be urged to move upwards as indicated in figure 10f due to the opposite polarization of the magnets 91, 95 whereby the spout 70 will pop up thereby allowing free access to the opening 72. In this manner a complete cycle from open to close to open as illustrated to figure 10a-10f is completed.

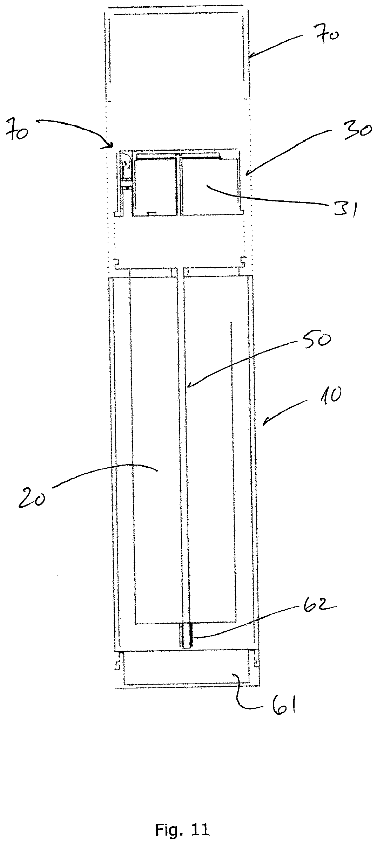

In figure 11 is illustrated a cross-section through one embodiment of the invention where many of the features discussed above are integrated in one unit.

The inner and outer containers 10, 20 are provided with a central conduit 50. In a bottom part of the outer chamber 10 is provided an induction coil 62 which heats the water in the outer chamber during use. In this example the chamber 61 contains the necessary electronics and batteries in order to control the heating element 62.

On top of the inner and outer containers 10, 20 is provided a brewing chamber 30 which in this embodiment is provided with a spout as discussed above with reference to figures 8-10d. Finally, the entire top part may be closed off by a lid 70 such that an integrated unit is provided.

The invention has now been explained with reference to a simplified embodiment of the invention, and it is clear that variations of the invention may be carried out by the skilled person within the scope of the appended claims.

## Claims

1. Apparatus for brewing hot infusion beverages, where said apparatus comprises an outer container having a side wall and a bottom and an inner container having a sidewall and a bottom, said inner container arranged concentrically inside said outer container, and a lid comprising a brewing chamber in fluid communication with the inner container and wherein a filter element is provided, and a conduit, and a heating element in thermal contact with said conduit, and a source of energy **characterized in that** said conduit is concentrically arranged inside the inner container, and said heating element is concentrically arranged around said conduit, where said conduit is in fluid communication with the outer container adjacent the bottom of said outer container and said brewing chamber.

2. Apparatus according to claim 1 **characterized in that** the inner container has an upper rim and that the outer container has an upper rim, and that the upper rim of the inner container and the outer container are connected to a top ring (40).

3. Apparatus according to claim 1 **characterized in that** the top ring comprises a first air outlet valve allowing air in the inner container to communicate with the ambient surroundings, and optionally a second outlet valve allowing air to leave the outer container to the ambient surroundings, the second outlet valve's ability to let air escape the outer container is adjustable.

4. Apparatus according to claim 1 **characterized in that** the lid comprises a removable lid allowing extract to be placed and removed from the brewing chamber.

5. Apparatus according to claim 1 where the heating element is an induction coil, arranged around the conduit.

6. Apparatus according to claim 1 where the heating element is arranged in the outer container.

7. Apparatus according to claim 1 where the heating element is arranged in the inner container.

8. Apparatus according to claim 1 wherein the outer container is made from an insulating material, or where the outer container has insulating properties obtained by a composite or multilayer container wall construction.

9. Apparatus according to claim 1 wherein an outer insulating sleeve is provided where said sleeve fits the outside of the outer container, optionally provided with a closing cap.

10. Apparatus according to any preceding claim wherein a tilt alarm is integrated in the apparatus, where said tilt alarm is activated when/if the apparatus is tilted/displaced a certain angle from a vertical upright position, in which position the conduit is substantially vertical, where the tilt alarm at least disengages the source of energy and optionally sounds an audible alarm and/or visible alarm.

11. Apparatus according to claim 1 wherein the lid comprises a water distribution member, which in use is in fluid connection with the conduit.

12. Apparatus according to claim 11 where said water distribution member is integrated in the wall of the lid, and where said water distribution member comprise a water distribution part, for distributing the heated water substantially evenly over a hot beverage extract positioned inside the lid.

13. Apparatus according to any preceding claim **characterized in that** the heating element is connected to a source of electricity by means of an electrical wire, and optionally that the electrical wire is detachable from the apparatus

14. Apparatus according to any preceding claim **characterized in that** a top ring is provided, where said top ring has two apertures, where one aperture is connected to the open end of the outer container, where the inner container has a tapered upper end, connecting to the circumference of the other aperture, and said top ring in a central portion has a central aperture allowing the conduit to pass through said top ring.

15. Method of brewing a hot infusion beverage, using an apparatus according to any of claims 1 to 14, wherein :
- The lid is removed and a desired beverage extract is arranged in the brewing chamber;
- Water is filled in the outer container;
- The lid is replaced and fastened to the top of the containers;
- The heating element is activated;
- The water in the outer container will be heated and escape through the conduit to the brewing chamber and percolate through the extract, and drip into the inner container.
